# EUROPÄISCHE PATENTSCHRIFT

(11) **EP 1 022 483 B1**
(45) Veröffentlichungstag und Bekanntmachung des Hinweises auf die Patenterteilung: **16.02.2005**
(21) Anmeldenummer: 99119805.2
(22) Anmeldetag: 06.10.1999
(51) Int. Cl.: F16F 13/26

(54) **Umschaltbares Zweikammer-Stützlager mit hydraulischer Dämpfung**
Switchable twin chamber mounting with hydraulic damping
Support de montage commutable à amortissement hydraulique et à deux chambres

(30) Priorität: 22.01.1999 DE 19902493
(43) Veröffentlichungstag der Anmeldung: 26.07.2000
(73) Patentinhaber: Carl Freudenberg KG, 69469 Weinheim (DE)
(72) Erfinder: Weber, Heinz, 69502 Hemsbach (DE); Rudolf, Hans-Joachim, 26935 Stadland (DE)

(56) Entgegenhaltungen:
- EP-A- 0 821 181
- EP-A- 0 840 035
- DE-A- 4 141 332
- DE-C- 19 902 493

## Beschreibung

### Technisches Gebiet

Die Erfindung betrifft ein umschaltbares Zweikammer-Stützlager mit hydraulischer Dämpfung, insbesondere ein Motorlager in Kraftfahrzeugen mit einer Arbeitskammer und einer Ausgleichskammer, die durch eine Trennwand voneinander getrennt sind, die in ihrer Mitte mit einer über ein Stellglied verschließbaren Durchtrittsöffnung versehen ist, einen die beiden Kammern hydraulisch verbindenden Dämpfungskanal hat und in einer Ausnehmung eine Membran aufweist, welche beidseitig wirksam in der Trennwand vorhandene Öffnungen überdeckt und durch das Stellglied flüssigkeitsdicht arretierbar ist und die von einer in einem Spalt axial frei verschiebbaren Klemmscheibe mit einem nabenförmigen Anschlussstück in ihrer Mitte überdeckt ist, wobei die Klemmscheibe mit Öffnungen im Bereich der Trennwandöffnungen versehen ist und durch das Stellglied verschoben die Membran arretiert oder freigibt.

Lager dieser Art werden benutzt um hochfrequente Schwingungen mit kleinen Amplituden und auch niederfrequente Schwingungen mit großen Amplituden zu dämpfen. Die höherfrequenten Schwingungen die während des Fahrbetriebs auftreten, werden durch die Membran isoliert, die innerhalb eines Düsenkäfigs angeordnet ist und die bei geschlossener Durchtrittsöffnung in der Mitte der Trennwand wirksam wird. Die im Betrieb auch auftretenden niederfrequenten Schwingungen werden durch den Dämpfungskanal unterdrückt. Zur Unterdrückung der Schwingungen im Leerlauf wird die Durchtrittsöffnung in der Trennwand geöffnet und die in der Durchtrittsöffnung vorhandene Flüssigkeitssäule wirkt als Tilger für die Schwingungen.

### Stand der Technik

In der DE PS 41 41 332 ist ein umschaltbares Zweikammer-Stützlager behandelt, bei dem die in der Mitte der Trennwand liegende Durchtrittsöffnung über ein Stellglied verschließbar ist. Das Stellglied wird durch Unterdruck betätigt und hält während des Betriebs die Durchtrittsöffnung geschlossen, im Leerlauf dagegen wird die Durchtrittsöffnung geöffnet. In vielen Einsatzfällen hat sich diese Ausführungsform bewährt.

Eine gegenüber der oben genannten Ausführungsform verbesserte Lösung ist in der älteren deutschen Patentanmeldung 198 07 868 enthalten. Dort wird die Schwingungstilgung leerlaufbedingter Schwingungen und die Isolierung höherfrequenter Schwingungen in einem Drehzahlbereich oberhalb der Leerlaufdrehzahl dadurch verbessert, daß die Membran durch das Stellglied bei Öffnung der in der Trennwand vorhandenen Durchtrittsöffnung flüssigkeitsdicht arretierbar ist. Während des Betriebs der Verbrennungskraftmaschine oberhalb der Leerlaufdrehzahl wird die Durchtrittsöffnung durch das Stellglied verschlossen und die flüssigkeitsdichte Arretierung der Membran innerhalb der Trennwand durch eine Rückstellfeder im Stellglied aufgehoben. In diesem Betriebszustand funktioniert das Lager wie ein allgemein bekanntes hydraulisch dämpfendes Lager, bei dem zur Isolierung höherfrequenter kleinamplitudiger, motorerregter Schwingungen die Membran lose hin- und herbeweglich innerhalb der Trennwand angeordnet ist. Zur Tilgung tieffrequenter großamplitudiger Schwingungen des Motors im Leerlauf wird die Durchtrittsöffnung geöffnet und die innerhalb der Durchtrittsöffnung vorhandene Flüssigkeit schwingt phasenverschoben hin und her, und eine Reduktion der Lagersteifigkeit bei Leerlauf-Schwingungen wird erreicht.

Durch die schaltbare Membran werden stets ausgezeichnete Gebrauchseigenschaften des Lagers erreicht. Ein unter elastischer Vorspannung stehendes Spannelement sorgt dafür, daß die Membran bei offener Durchtrittsöffnung arretiert ist. Sobald die Durchtrittsöffnung durch das Stellglied geschlossen wird, wird die Arretierung der Membran aufgehoben. Dabei muß die Stellfeder neben der Kraft zum Schließen der Öffnung auch die Kraft des Spannelements überwinden.

Durch den nächstliegenden Stand der Technik, die EP 0 840 035 A1 ist ein umschaltbares Zweikammer-Stützlager bekannt geworden, bei dem die Membran von einer in einem Spalt axial frei verschiebbaren Klemmscheibe überdeckt ist, die mit Öffnungen um Bereich der Trennwandöffnungen versehen ist und die durch ein Stellglied verschoben die Membran arretiert oder freigibt.

### Darstellung der Erfindung

Der Erfindung liegt die Aufgabe zugrunde, die Stützlager weiterzuentwickeln um noch weiter verbesserte Betriebs- und Dämpfungseigenschaften zu erreichen. Es soll eine gute Schwingungsdämpfung bei sicher geschlossener Durchtrittsöffnung in der Mitte der Trennwand und eine gute Isolation bei vollständiger Öffnung der Durchtrittsöffnung erreicht werden. Die beim Öffnen erforderliche Kraft zur Überwindung der Federvorspannung der Verschlußfeder soll möglichst gering sein, da der zur Verfügung stehende Unterdruck begrenzt ist. Hier soll eine Druckdifferenz von 0,5 bar, maximal 0,7 bar nicht überschritten werden. Schließlich soll die Verwendung einer degressiven Verschlußfeder möglich sein.

Die Lösung der gestellten Aufgabe wird mit den Merkmalen der Ansprüche 1 oder 2 erreicht. Nach einer Ausführungsform des neuen Zweikammer-Stützlager wird die Membran von einer axial quasi kraftfrei verschiebbaren Klemmscheibe überdeckt ist, die mit Öffnungen im Bereich der Trennwandöffnung versehen ist und die durch das Stellglied verschoben die Membran arretiert oder freigibt. Die Klemmscheibe wird benachbart zur Membran in einem zwischen den dem Oberteil und dem damit korrespondierenden Unterteil der Trennwand gebildeten Spalt frei verschiebbar angeordnet. Ihre Verschiebung in die ein oder andere Richtung ergibt eine Freigabe beziehungsweise eine Arretierung der Membran. Die freigegebene Membran ist in der einen oder anderen Strömungsrichtung bewegbar. Die arretierte Membran liegt am Unterteil der Trennwand fest an.

In ihrer Mitte ist die Klemmscheibe mit einem nabenförmigen Anschlußstück versehen, das in der Durchtrittsöffnung angeordnet ist und mit seinem freien Rand zur Ausgleichskammer weist. Dieser freie Rand des Anschlußstücks dient als Anschlagfläche für den Verschluß der Durchtrittsöffnung. Die Gegenfläche des Verschlusses wird von einer Ringfläche der beweglichen Außenwand der Ausgleichskammer gebildet.

Verschiedene Ausführungsformen für das Stellglied zum Verschieben der Klemmscheibe sind denkbar. Eine bevorzugte Ausführungsform sieht vor, das Stellglied in der Außenwand der Ausgleichskammer anzuordnen und mit einem Mitnehmer zu versehen, der in das Anschlußstück der Klemmscheibe hineinragt und erst nach Freigabe der Durchtrittsöffnung durch das Stellglied an der Klemmscheibe zum Anliegen kommt und über diese die Arretierung der Membran bewirkt.

Um eine gute Schwingungstilgung zu erreichen ist der Mitnehmer nach einem Merkmal der Erfindung gem. Anspruch 1 tulpenförmig mit seitlichen Durchtrittsöffnungen im Bodenbereich ausgebildet sein, dessen oberer Rand die Klemmscheibe betätigt. Nach einem Merkmal der Erfindung gem. Anspruch 2 ist vorgesehen, den Mitnehmer pilzförmig auszubilden und zwar mit einem sternförmigen Hut, wobei die Sternspitzen für den Arretiervorgang an der Klemmscheibe zum Anliegen gelangen.

Die Membran wird gem. einer Ausführungsform in einer ringförmigen Nut des Unterteils der Trennwand angeordnet. Sie ragt soweit aus der Nut hervor, daß der von der direkt darüberliegenden Klemmscheibe gewollte Arretiervorgang durchgeführt werden kann.

Die Klemmscheibe besteht im wesentlichen aus einem Blech, das mit einem polymeren Werkstoff ummantelt ist. Sie ist außerdem mit Dichtlippen zur Abdichten des unteren Teils des Dämpfungskanals versehen.

Es ist günstig, wenn die Öffnungen in der Klemmscheibe und die Öffnungen im Ober- und Unterteil der Trennwand fluchtend zueinander angeordnet sind.

### Kurzbeschreibung der Zeichnungen

Anhand der beigefügten Zeichnungen wird die Erfindung näher erläutert.

Es zeigen:
- Figur 1: die wesentlichen Lagerteile im Längsschnitt und
- Figur 2: auszugsweise eine Variante des Stellgliedmitnehmers.

### Ausführung der Erfindung

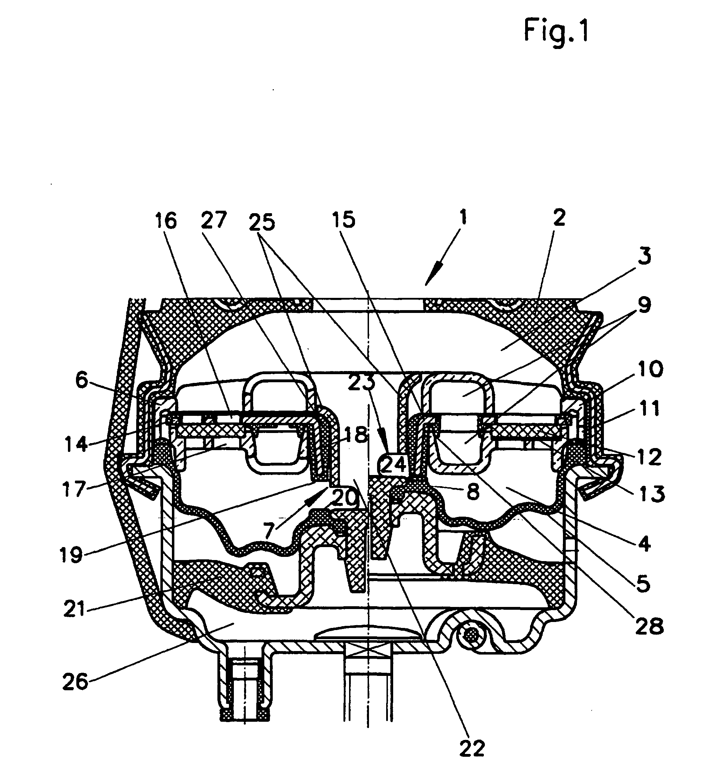

Die Figur 1 zeigt ein umschaltbares Zweikammer-Stützlager 1 mit hydraulischer Dämpfung im Längsschnitt. Der obere, rein mechanische Aufbau des Lagers 1 ist weggelassen, da er üblicher Bauart ist. An dem Federkörper 2 befindet sich ein Traglager für den Anschluß an einem entsprechenden Motorteil. Der Federkörper 2 und Traglager bilden die obere Begrenzung für die Arbeitskammer 3 die mit einer Hydraulikflüssigkeit gefüllt ist. Die Arbeitskammer 3 kommuniziert hydraulisch mit der Ausgleichskammer 4, deren äußere Begrenzungswand durch den Rollbalg 5 gebildet ist. Beide Kammern 3 und 4 sind durch die Trennwand 6 voneinander getrennt. Die Trennwand 6 hat in ihrer Mitte die Durchtrittsöffnung 7, die durch das Stellglied 8 verschließbar ist.

In der Trennwand 6 ist auch der Dämpfungskanal 9 untergebracht, über den ständig die beiden Kammern 3 und 4 verbunden sind. Die Trennwand 6 besteht aus einem Oberteil 10 und einem damit korrespondierenden Unterteil 11, die an ihrem äußeren Rand miteinander verbunden sind. Der Dämpfungskanal 9 ist in die Trennwand 6 beziehungsweise dessen Oberteil 10 oder Unterteil 11 integriert.

Die Ausnehmung zur Aufnahme der Membran 12 wird von einer ringförmigen Nut 13 im Unterteil 11 der Trennwand 6 gebildet. Oberhalb und unterhalb der Membran 12 sind in den Trennwandteilen 10 und 11 eine Reihe von Öffnungen vorhanden, die von der Membran 12 abgedeckt werden.

Zwischen dem Oberteil 10 und dem Unterteil 11 der Trennwand 6 ist der Spalt 14 vorhanden, in den die axial verschiebbare Klemmscheibe 15 eingesetzt ist. Die Klemmscheibe 15 überdeckt die Membran 12 und dient in weiten Bereichen auch als Begrenzung für den Dämpfungskanal 9. Die Klemmscheibe 15 ist mit Öffnungen 16 versehen, die fluchtend zu den Trennwandöffnungen 17 liegen. In ihrer Mitte ist die Klemmscheibe 15 mit einem nabenförmigen Anschlußstück 18 ausgestattet, das in die Durchtrittsöffnung 7 hineinragt und mit ihrem freien Rand 19 zur Ausgleichskammer 4 gerichtet ist. Der freie Rand 19 stellt die Anschlagfläche für das Verschließen der Durchtrittsöffnung 7 dar. Die Gegenfläche 20 des Verschlusses wird von einer am Rollbalg 5 ausgebildeten Wulst hergestellt. Über das Federglied 21 wird der mittlere Teil des Rollbalgs 5, wie auf der rechten Seite der Figur gezeigt, in die Schließstellung gedrückt. Die Klemmscheibe 15 ist angehoben und liegt am Oberteil 10 der Trennwand 6 an. Die Membran 12 ist freigegeben und innerhalb der Nut 13 in axialer Richtung beweglich. In dieser Stellung des Stellgliedes 8 wird die Dämpfung der Schwingungen über den Dämpfungskanal 9 und die Membran 12 in Verbindung mit den Öffnungen 16 und 17 erreicht.

In der Mitte des Stellglieds 8 beziehungsweise des Rollbalgs 5 ist ein Mitnehmer 22 angeordnet, der in das Anschlußstück 18 hineinragt. Dieser Mitnehmen 22 ist tulpenförmig ausgebildet und hat im Bodenbereich 23 die seitlichen Durchtrittsöffnung 24. Sein oberer Rand 25 ist nach außen gebördelt und kommt, wenn das Stellglied 8 geöffnet, d. h. nach unten bewegt wird an der Klemmscheibe 15 zum Anliegen, wie auf der linken Seite der Figur gezeigt, drückt dadurch die Klemmscheibe 15 nach unten und die Membran 12 wird arretiert. Die Bewegung des Stellgliedes 8 wird dadurch erreicht, daß der unterhalb der Schaltfeder 21 liegende Raum 26 einem Unterdruck unterworfen wird, so daß die Mitte des Rollbalgs 5 nach unten gezogen wird. Wenn die Durchtrittsöffnung 7 freigegeben ist, strömt die Flüssigkeit von der Arbeitskammer 3 in die Ausgleichskammer 4. Durch die in der Durchtrittsöffnung 7 vorhandene Flüssigkeitssäule wird eine Tilgung von niederfrequenten Schwingungen erreicht.

Die frei verschiebbare Klemmscheibe 15 ist mit einer Ummantelung 27 aus einem polymeren Werkstoff versehen. An ihrem unteren Teil hat sie die Dichtlippen 28, die in den Dämpfungskanal 9 eingreifen und eine Abdichtung bewirken.

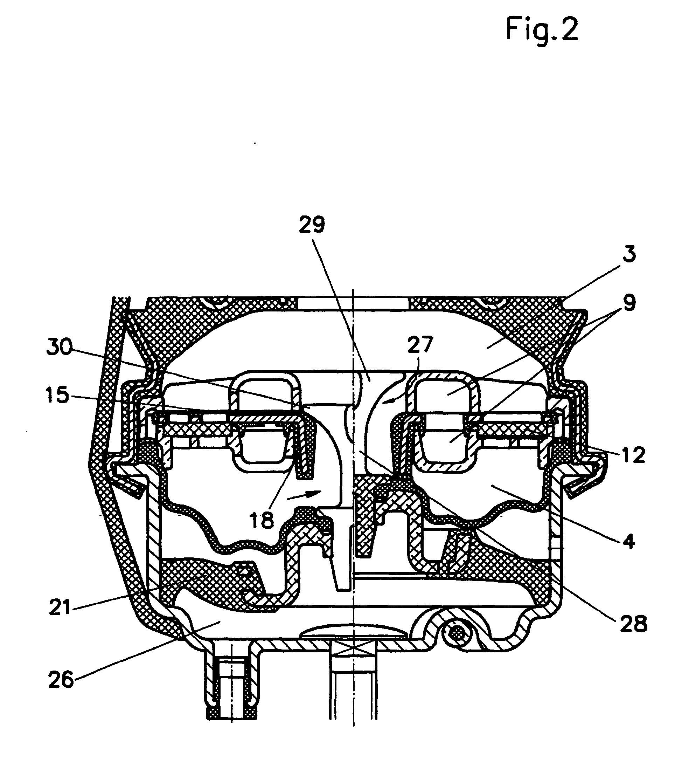

In der Figur 2 ist eine Variante des Mitnehmers 22 gezeigt, der hier pilzförmig ausgebildet ist. An dem Stiel 28 ist ein sternförmiger Hut 29 angebracht, dessen Sternspitzen 30 die Klemmscheibe 15 für den Arretiervorgang in axialer Richtung nach unten drücken. Es ist günstig hier wenigstens 3 Sternspitzen 30 vorzusehen. Alle anderen Teile des Stützlagers sind identisch mit den Teilen der Figur 1.

## Patentansprüche

1. Umschaltbares Zweikammer-Stützlager mit hydraulischer Dämpfung, insbesondere Motorlager in Kraftfahrzeugen mit einer oberen Arbeitskammer (3) und einer unteren Ausgleichskammer (4), die durch eine Trennwand (6) voneinander getrennt sind, die in ihrer Mitte mit einer über ein Stellglied (8) verschließbaren Durchtrittsöffnung (7) versehen ist, einen die beiden Kammern (3, 4) hydraulisch verbindenden Dämpfungskanal (9) hat und in einer Ausnehmung eine Membran (12) aufweist, die beidseitig wirksam in der Trennwand (6) vorhandene Öffnungen (17) überdeckt und flüssigkeitsdicht arretierbar ist und die von einer in einem Spalt (14) axial frei verschiebbaren Klemmscheibe (15) mit einem nabenförmigen Anschlussstück (18) in ihrer Mitte überdeckt ist, wobei die Klemmscheibe mit Öffnungen (16) im Bereich der Trennwandöffnungen (17) versehen ist und durch das Stellglied (8) verschoben die Membran (12) arretiert oder freigibt, **dadurch gekennzeichnet, daß** das Stellglied (8) mit einem Mitnehmer (22) versehen ist, der tulpenförmig mit nach außen gebördeltem oberen Rand (25) und mit seitlichen Durchtrittsöffnungen (24) im Bodenbereich (23) ausgebildet ist, der in das nabenförmige Anschlußstück (18) der Klemmscheibe (15) hineinragt und erst nach Freigabe der Durchtrittsöffnungen (7, 24) durch das Stellglied (8) mit seinem oberen Rand (25) an der Klemmscheibe (15) zum Anliegen kommt und über diese die Arretierung der Membran (12) bewirkt.

2. Umschaltbares Zweikammer-Stützlager mit hydraulischer Dämpfung, insbesondere Motorlager in Kraftfahrzeugen mit einer oberen Arbeitskammer (3) und einer unteren Ausgleichskammer (4), die durch eine Trennwand (6) voneinander getrennt sind, die in ihrer Mitte mit einer über ein Stellglied (8) verschließbaren Durchtrittsöffnung (7) versehen ist, einen die beiden Kammern (3, 4) hydraulisch verbindenden Dämpfungskanal (9) hat und in einer Ausnehmung eine Membran (12) aufweist, die beidseitig wirksam in der Trennwand (6) vorhandene Öffnungen (17) überdeckt und flüssigkeitsdicht arretierbar ist und die von einer in einem Spalt (14) axial frei verschiebbaren Klemmscheibe (15) mit einem nabenförmigen Anschlussstück (18) in ihrer Mitte überdeckt ist, wobei die Klemmscheibe mit Öffnungen (16) im Bereich der Trennwandöffnungen (17) versehen ist und durch das Stellglied (8) verschoben die Membran (12) arretiert oder freigibt, **dadurch gekennzeichnet, daß** das Stellglied (8) mit einem Mitnehmer (22) versehen ist, der pilzförmig ausgebildet ist, dessen Hut (29) sternförmig ist und dessen Stemspitzen (30) für den Arretiervorgang an der Klemmscheibe (15) anliegen und, der in das nabenförmige Anschlußstück (18) der Klemmscheibe (15) hineinragt und erst nach Freigabe der Durchtrittsöffnung (7) in der Mitte der Trennwand (6) durch das Stellglied (8) mit seinen Stemspitzen (30) an der Klemmscheibe (15) zum Anliegen kommt und über diese die Arretierung der Membran (12) bewirkt.

3. Stützlager nach Anspruch 1 oder 2, **dadurch gekennzeichnet, dass** die Klemmscheibe (15) aus einem Blech gebildet ist und eine Ummantelung (27) aus einem polymeren Werkstoff hat.

4. Stützlager nach einem der Ansprüche 1 bis 3, **dadurch gekennzeichnet, dass** die Klemmscheibe (15) mit Dichtlippen (28) zur Abdichtung des im unteren Teil (11) der Trennwand (6) vorhandenen Dämpfungskanals (9) versehen ist.

## Claims

1. A switchable two-chamber thrust bearing with hydraulic damping, in particular an engine bearing in motor vehicles, with an upper working chamber (3) and a lower equalizing chamber (4) which are separated from one another by a partition (6) which is provided in its centre with a passage opening (7), the said opening being closable by means of an actuator (8), has a damping channel (9) connecting the two chambers (3, 4) hydraulically and comprises a membrane (12) in a recess, which membrane on both sides effectively covers openings (17) present in the partition (6) and can be secured in a liquid-tight manner and is covered by a clamping disc (15) with a hub-shaped connecting piece (18) in its centre, which clamping disc is freely axially displaceable in a gap (14), the clamping disc being provided with openings (16) in the region of the partition openings (17) and, displaced by the actuator (8), securing or releasing the membrane (12), **characterized in that** the actuator (8) is provided with a driver (22) which is designed in a tulip shape with an outwardly flared upper edge (25) and with lateral passage openings (24) in the bottom region (23) and projects into the hub-shaped connecting piece (18) of the clamping disc (15) and, only after the passage openings (7, 24) have been freed by the actuator (8), comes to bear with its upper edge (25) against the clamping disc (15) and via the latter causes the membrane (12) to be secured.

2. A switchable two-chamber thrust bearing with hydraulic damping, in particular an engine bearing in motor vehicles, with an upper working chamber (3) and a lower equalizing chamber (4) which are separated from one another by a partition (6) which is provided in its centre with a passage opening (7), the said opening being closable by means of an actuator (8), has a damping channel (9) connecting the two chambers (3, 4) hydraulically and comprises a membrane (12) in a recess, which membrane on both sides effectively covers openings (17) present in the partition (6) and can be secured in a liquid-tight manner and is covered by a clamping disc (15) with a hub-shaped connecting piece (18) in its centre, which clamping disc is freely axially displaceable in a gap (14), the clamping disc being provided with openings (16) in the region of the partition openings (17) and, displaced by the actuator (8), securing or releasing the membrane (12), **characterized in that** the actuator (8) is provided with a driver (22) which is designed in a mushroom shape, the cap (29) of which is star-shaped and the star points (30) of which bear against the clamping disc (15) for the securing operation, and projects into the hub-shaped connecting piece (18) of the clamping disc (15) and, only after the passage opening (7) in the centre of the partition (6) has been freed by the actuator (8), comes to bear with its star points (30) against the clamping disc (15) and via the latter causes the membrane (12) to be secured.

3. A thrust bearing according to claim 1 or 2, **characterized in that** the clamping disc (15) is formed from a metal sheet and has a covering (27) made of a polymeric material.

4. A thrust bearing according to any one of claims 1 to 3, **characterized in that** the clamping disc (15) is provided with sealing lips (28) for sealing the damping channel (9) present in the lower part (11) of the partition (6).

## Revendications

1. Support de montage commutable à amortissement hydraulique et à deux chambres, notamment support de moteur dans des véhicules automobiles, comprenant une chambre de travail supérieure (3) et une chambre de compensation inférieure (4) séparées l'une de l'autre par une cloison (6) qui est pourvue en son milieu d'une ouverture de passage (7) pouvant être fermée par le biais d'un élément de réglage (8), qui comporte un canal d'amortissement (9) reliant les deux chambres (3, 4) de manière hydraulique et est pourvue, dans un évidement, d'une membrane (12) qui couvre sur les deux côtés, d'une manière active, des ouvertures (17) présentes dans la cloison (6), qui peut être bloquée de manière étanche aux fluides et qui est couverte en son milieu par un disque de serrage (15) pourvu d'un élément de jonction (18) en forme de moyeu pouvant être déplacé librement dans le sens axial dans un interstice (14), le disque de serrage étant pourvu d'ouvertures (16) dans la zone des ouvertures (17) de la cloison et bloquant ou libérant la membrane (12) lorsqu'il est déplacé par l'élément de réglage (8), **caractérisé en ce que** l'élément de réglage (8) est pourvu d'un entraîneur (22) exécuté de manière à avoir une forme en tulipe avec un bord supérieur (25) replié vers l'extérieur et des ouvertures de passage latérales (24) dans la zone du fond (23), lequel entraîneur (22) entre dans l'élément de jonction (18) en forme de moyeu du disque de serrage (15) et vient se mettre en contact avec le disque de serrage (15), avec son bord supérieur (25), provoquant le blocage de la membrane (12) par le biais du disque, seulement après que les ouvertures de passage (7, 24) ont été libérées par l'élément de réglage (8).

2. Support de montage commutable à amortissement hydraulique et à deux chambres, notamment support de moteur dans des véhicules automobiles, comprenant une chambre de travail supérieure (3) et une chambre de compensation inférieure (4) séparées l'une de l'autre par une cloison (6) qui est pourvue en son milieu d'une ouverture de passage (7) pouvant être fermée par le biais d'un élément de réglage (8), qui comporte un canal d'amortissement (9) reliant les deux chambres (3, 4) de manière hydraulique et est pourvue, dans un évidement, d'une membrane (12) qui couvre sur les deux côtés, d'une manière active, des ouvertures (17) présentes dans la cloison (6), qui peut être bloquée de manière étanche aux fluides et qui est couverte en son milieu par un disque de serrage (15) pourvu d'un élément de jonction (18) en forme de moyeu pouvant être déplacé librement dans le sens axial dans un interstice (14), le disque de serrage étant pourvu d'ouvertures (16) dans la zone des ouvertures (17) de la cloison et bloquant ou libérant la membrane (12) lorsqu'il est déplacé par l'élément de réglage (8), **caractérisé en ce que** l'élément de réglage (8) est pourvu d'un entraîneur (22) exécuté de manière à avoir la forme d'un champignon dont le chapeau (29) est en forme d'étoile et dont les pointes d'étoile (30) sont en contact avec le disque de serrage (15) pour le processus de blocage, lequel entraîneur (22) entre dans l'élément de jonction (18) en forme de moyeu du disque de serrage (15) et vient se mettre en contact avec le disque de serrage (15), avec ses pointes d'étoile (30), provoquant le blocage de la membrane (12) par le biais du disque, seulement après que l'ouverture de passage (7) au milieu de la cloison (6) a été libérée par l'élément de réglage (8).

3. Support de montage selon la revendication 1 ou 2, **caractérisé en ce que** le disque de serrage (15) est formé par une tôle et est pourvu d'un revêtement (27) formé d'un matériau polymère.

4. Support de montage selon l'une des revendications 1 à 3, **caractérisé en ce que** le disque de serrage (15) est pourvu de lèvres d'étanchéité (28) pour étanchéifier le canal d'amortissement (9) présent dans la partie inférieure (11) de la cloison (6).
